# EUROPEAN PATENT SPECIFICATION

(11) **EP 4 227 655 B1**
(45) Date of publication and mention of the grant of the patent: **08.05.2024**
(21) Application number: 23152212.9
(22) Date of filing: 18.01.2023
(51) Int. Cl.: G01K 1/024, G01K 1/14, G01K 13/02, B30B 9/20, D21C 9/02, D21D 1/40, D21G 9/00

(54) **PULP SUSPENSION TREATMENT DEVICE**
HOLZSTOFFSUSPENSIONSBEHANDLUNGSVORRICHTUNG
DISPOSITIF DE TRAITEMENT D'UNE SUSPENSION DE PÂTE À PAPIER

(30) Priority: 10.02.2022 FI 20225115
(43) Date of publication of application: 16.08.2023
(73) Proprietor: Valmet Technologies Oy, 02150 Espoo (FI)
(72) Inventor: KETTUNEN, Heikki, 04400 Järvenpää (FI); CARLSTRÖM, Robert, 651 15 Karlstad (SE); EDSTRÖM, Tomas, 851 94 Sundsvall (SE); HUMANN, Christian, 64297 Darmstadt (DE); HÖGLUND, Tomas, 851 94 Sundsvall (SE); LUNDBERG, Jörgen, 10074 Stockholm (SE); MARROCCO, Carlo, Ville Saint-Laurent, Quebec, H4R 2B2 (CA); SUNDLING, Emma, 851 94 Sundsvall (SE); RUOTSI, Juha, 40101 Jyväskylä (FI)
(74) Representative: Berggren Oy

(56) References cited:
- CN-U- 204 343 097
- US-A1- 2011 303 380
- US-A1- 2019 368 946
- US-B2- 10 739 210
- Anonymous: "Online view for pulp flow distribution in TwinRoll Press - Valmet TwinRoll Press Vat Temperature Monitoring", Valmet corporate website, 6 July 2022 (2022-07-06), XP093057406, Espoo, Finland Retrieved from the Internet: URL:https://valmet.my.salesforce-sites.com /solutionfinderweb/FilePreview?id=0694K000 00CGYrnQAH [retrieved on 2023-06-23]

## Description

### Technical field

In general, the present invention relates to a suspension treatment process and more particularly to measuring temperature in connection with a device for suspension treatment, for example in the pulp production process to a washing device, a container, a tower, a tank, a screen, a refiner. More especially the present invention relates to a pulp suspension treatment device according to preamble part of the independent device claim.

### Background

In patent publication US10739210B2 is disclosed a sensor for measuring temperature of a fluid at different regions within a vessel, the sensor comprising an array of elements coupled together between an input and an output, each element having a temperature-dependent parameter, wherein the array of elements is extendable along the vessel for measuring a temperature profile of the fluid within the vessel, with the input coupled to a driving source for driving the sensors and the output coupled to a detector for measuring an aggregate of the temperature-dependent parameter from the array of elements, the aggregate being indicative of a quantity of useful fluid in the vessel, useful fluid being fluid having a temperature above a threshold temperature.

The suspension treatment process is involved in various industries, such as wastewater handling, food production or pulp production. In pulp production process several different types of devices are used for different process steps and for storing pulp between the process steps., for example for washing pulp or for treating pulp or for storing pulp. These devices comprise different types of washers, screens, containers, towers, tanks etc., know as such to one skilled in the art. In these devices pulp is typically in suspension form i.e. in the process a mixture or a solution of pulp material and liquid, typically water, is processed. In these devices of pulp production it is important to have information in regard of flow properties of the pulp, of liquid level in the device etc.

In patent application publication WO2021206601A1 is disclosed a pulp distribution compartment arrangement, a pulp filter equipment and a pulp introduction method, in which a control unit with an input for information associated with sensor readings responsive to properties associated with pulp flow. The information associated with sensor readings comprises information concerning at least one of a flow speed of pulp, pressure in said pulp, pulp temperature and pulp conductivity. Examples of such sensors are e.g. pressure sensors, flow speed sensors, temperature sensors, conductivity sensors etc. The sensors are within a pulp compartment or at an exit opening from a distribution compartment and connected by wired connections or wireless connections to the input of the control unit. The sensors are installed to measure pulp flow directly. This known system does not give indication of stagnant flow or of build-ups in the flow nor of overall uniformity of flow across a measured surface area of equipment.

One type of the devices for the pulp production is a wash press for washing pulp and removing liquid thereof. The wash press typically comprises two rolls, between which a pressing nip is arranged and the rolls are located in a chamber, into which the pulp is fed to be washed and pressed in the pressing nip for removal of liquid. Twin-roll wash presses are disclosed e.g. in US2011303380A1 and CN204343097U. In the wash presses pulp flow should be uniformly distributed along the nip to achieve maximum washing capacity and to get uniform nip pressure. Stagnant flow and build-ups inside the chamber disturb the process and may even cause roll failure if a lump of build-up material releases to the pressing nip. In case infeed of the flow at certain consistency, for example pulp and black liquor flow, is too large to the chamber, the pressed liquid will flood over shafts of the rolls and their bearings causing corrosion damage. There exist no easy or robust or cost efficient technology to measure level of the washing liquid inside the chamber of the wash press.

### Summary

An object of the invention is to create a pulp suspension treatment device, in which the disadvantages of the prior art are eliminated or at least minimized.

A particular object of the invention is to create a pulp a suspension treatment device, which is simple of configuration and needs no cable installations.

A particular object of the invention is to create a pulp suspension treatment device, which can be installed to its location as ready-to-measure.

To achieve the objects mentioned above and those that will be discussed later the pulp suspension treatment device according to the invention is mainly characterized by the features of the characterizing part of the independent device claim.

Advantageous features and embodiments of the invention are defined in the dependent claims.

According to an advantageous aspect measurements and monitoring of the suspension treatment device is based on temperature sensor system attached on the outer surface of a wall/-s of the chamber. The measuring system comprises a number of temperature sensors of the temperature sensor system, which sensors are located on the outer wall surface of the chamber of the suspension treatment device.

According to an advantageous aspect based on the measurement results of the temperature sensor system of the measuring system a temperature map of the suspension treatment device is generated by a data log, display and control unit of the measuring system. The temperature map provides information of suspension flow in respective parts of the suspension treatment device, for example of infeed temperature map. By continuous or batchwise measurements and their respective temperature maps also trends in operation of the suspension treatment device can be detected. For example differences or deviations in temperatures indicate stagnant suspension flow and/or build-ups in the chamber.

According to an advantageous aspect the temperature sensor system is advantageously mounted in at least one band and the band or the bands form thus a bus type temperature sensor system for the measuring system. The large number of the sensors and large surface area can be covered efficiently with these bus type of sensors. It means many temperature sensors are serially or parallelly connected to form at least one measurement channel of the measuring system.

Advantageously, the bus type temperature sensor are provided as a long sensor band/-s, in which the temperature sensors are located spaced apart at desired locations. The temperature sensor band/-s can be attached onto the outer surface of the wall of the device / the chamber by adhesive or mechanically. Advantageously, the measurement results are transmitted to a data log, display and/or control unit via wired connection or wirelessly.

Advantageously, the temperature sensors / the temperature sensor bands of the temperature sensor system are mounted to a location/locations on the outer surface of the wall/-s of the chamber, where the pulp is directly on the other side of the wall i.e. no insulation on the wall is provided. This provides for good thermal contact of the temperature sensors to the object to be measured. Additionally advantageously, the contact to other environment is insulated and thus, temperature changes of the environment affect to the measurement is minimized, or even eliminated.

Advantageously, the temperature sensors / the temperature sensor bands of the temperature sensor system are permanently fixed on the outer surface of the wall/- s of the chamber.

According to an advantageous aspect monitoring of flow uniformity of pulp in a suspension treatment device is based on heat map of outside surface of wash press infeed chamber received on temperature measurements from the temperature sensor system of the measuring system, also uniformity of output flow from a suspension treatment device possible with the same principle i.e. based on the temperature measurements from the measuring system. Deviations in temperature detected based on the temperature measurements from the measuring system indicate, if suspension flow is stagnant and/or any build-ups of pulp inside the chamber. In, addition temperature levels itself can be used as a feedback signal to optimize compression efficiency of in the press nip of a wash press by setting a target temperature for processing based on the temperature measurement results received.

It should be noted that suspension treatment devices, such as wash presses, exists in various configurations and their wall structures can be formed of various ways. The suitable location/-s for the temperature sensors of the temperature sensor system is/are thus selected based on the configuration and the wall structure such, that the temperature measurement results reflect the need of operation of the respective suspension treatment device.

According to an advantageous aspect the temperature sensors of the temperature sensor system of the measuring system are selected from sensors suitable for measuring temperature, advantageously the temperature sensors are contacting sensors, for example based on resistivity method principle or capacity. Non-contact temperature sensors of the temperature sensor system are infrared sensors, with spot measuring, with line cameras and/or with cellular measuring matrix.

According to an advantageous aspect the temperature sensors of the temperature sensor system of the measuring system are contacting, bus type temperature sensors, whereby control of the measuring and signal of the measurement can be provided on same lead for several, even several hundreds of, sensors to avoid the need of single leads and great amount of channels for reading the measurement results. Thus, a very structure for the sensor arrangement is achieved. As examples of these types of sensors under trade names Analog Devices TMP-05/06 daisy chain or Maxim Integrated MAX31285 with I2C bus (1-Wire^{®}) can be used.

According to an advantageous aspect, the temperature sensors / temperature sensor band/-s of the temperature sensor system and/or the leads of the temperature sensor system are provided with a protection cover, for example by a metallic or polymeric foil or material layer.

Installation of parallelly connected series of temperature sensors (in one long strip) of the temperature sensor system on the outer surface of the infeed chamber to cover height from under normal liquor level to over flooding level. Liquor level is visible as gradient on the temperature values of the temperature strip. Pitch between the sensors can be tuned based on the need from few millimeters to couple of centimeters, and the number of sensors under couple of hundred of measurement points does not affect much on the sensor system and set-up costs.

The present invention is especially beneficial to be used in connection with wash presses but it is also advantageous, albeit not claimed, in connection with various other types of suspension treatment devices, for example containers, towers, tanks, screens and refiners.

By the invention and its advantageous features and aspects many advantages and benefits are achieved: the measuring system is easy, robust and cost efficient. It provides an improved system to measuring properties of suspension flow, level of the washing liquid inside the chamber of the wash press, etc. Additionally, the measuring system is utilizable, albeit not claimed, in connection of different types of suspension treatment devices to provide temperature information for checking and controlling of various functions of these devices. As according to the invention the several temperature sensors are attached on an outer surface of the wall of the chamber, the installation is fast and less expensive than in cases where sensors, sensor housing or signal transfer needs to tolerate direct flow conditions.

### Brief description of the drawings

In the following the invention is further explained in detail with reference to the accompanying drawing in which:
In figure 1 is schematically shown as an end view an advantageous example of a wash press with infeed of the pulp at sides of the device,
In figure 2 is schematically shown as an end view another advantageous example of a wash press with infeed of the pulp in middle of the device,
In figure 3 is schematically shown as a side view an advantageous example of a wash press.

### Detailed description

In the following description same reference signs designate for respective components etc. unless otherwise mentioned and it should be understood that the examples are susceptible of modification in order to adapt to different usages and conditions.

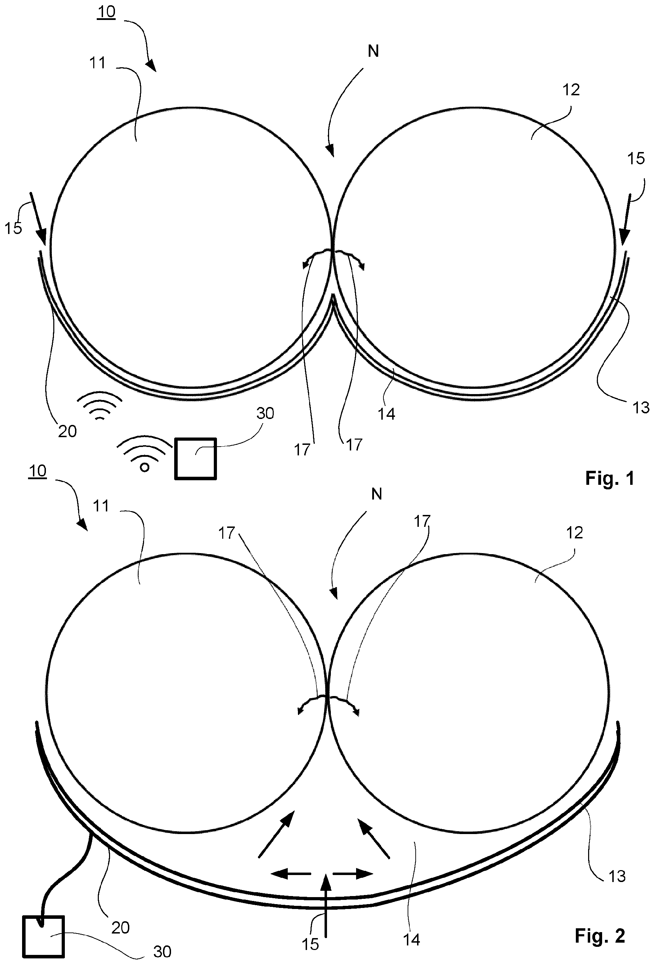

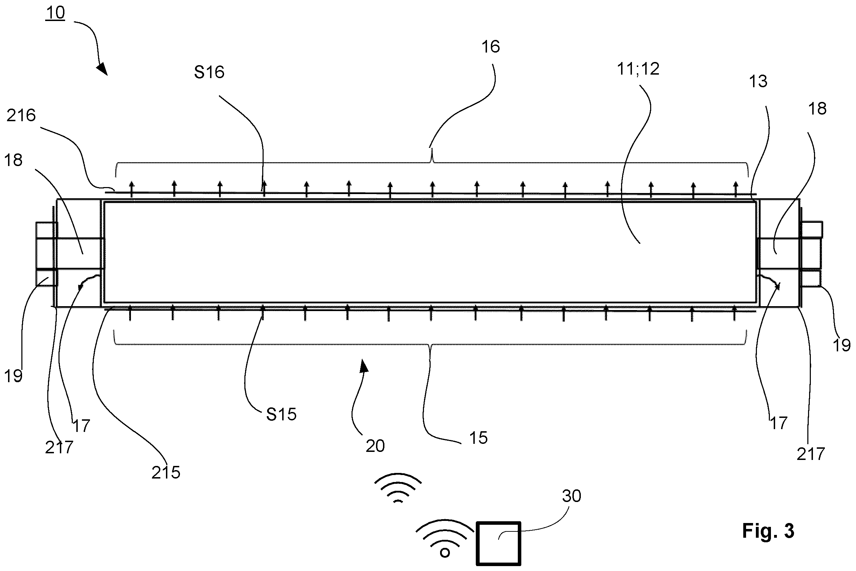

In figure 1 is schematically shown as an end view an example of a suspension treatment device, which in the example is a wash press 10 with infeed on sides. The wash press 10 comprises two press rolls 11, 12 between which a pressing nip N for pressing the pulp. The press rolls 11, 12 have a perforated shell. Infeed flow 15 of the pulp is arranged on the sides of the wash press, which is on one, outer longitudinal side of each of the press roll i.e. opposite side in respect of the pressing nip N. Below the press rolls 11, 12 a chamber 14 is arranged to which chamber the infeed flow 15 of the pulp is guided from the sides. The chamber 14 comprises a wall 13. Through the perforation of the shells of the press rolls 11, 12 part of liquid contained in the pulp is pressed inside the press rolls 11, 12 as a partial outflow 17 of washing liquid. This liquid is removed from the ends of the press rolls 11, 13 (fig. 3). The outflow 16 of the pulp is shown in figure 3. On the outer surface of the wall 13 of the chamber 14 a temperature sensor system 20 is arranged. To the temperature sensor system 20 a data log, display and control unit 30 is connected wirelessly (fig. 1) or by wired connection (fig. 2).

In figure 2 is schematically shown as an end view an example of a suspension treatment device, which in the example is a wash press 10 with infeed in the middle. Parts and elements of the wash press 10 according to this example correspond to those of the example according to the figure 1 unless otherwise mentioned. Infeed flow 15 of the pulp is arranged in the middle of the wash press, which is below the pressing nip N. For the infeed flow 15 of the pulp channels can be provides to distribute the pulp in the chamber 14 as shown in the figure. On the outer surface of the wall 13 of the chamber 14 a temperature sensor system 20 is arranged. To the temperature sensor system 20 a data log, display and control unit 30 is connected by wired connection (fig. 2) or wirelessly (fig. 1).

In figure 3 is schematically shown as a side view an example of a suspension treatment device, which in this example is a wash press 10. The wash press 10 comprises two press rolls 11, 12 between which a pressing nip N for pressing the pulp, of which press rolls 11, 12 one press roll 11;12 is shown in the figure 3. The press roll 11;12 comprises a shaft 18 with bearings 19. The press roll 11;12 has a perforated shell. Infeed flow 15 of the pulp is in the figure shown below the press roll 11; 12 and the outlet flow 16 of the pulp is in the figure shown above the press roll. The infeed flow 15 of the pulp is to a chamber 14, which comprises a wall 13. Through the perforation of the shell of the press roll 11; 12 part of liquid contained in the pulp is pressed in a pressing nip N (figs. 1-2) inside the press roll 11; 12 as a partial outflow 17 (fig. 1-2) of washing liquid and removed from the ends of the press roll 11; 12 at the partial outflow 17. On the outer surface of the wall 13 of the chamber 14 a temperature sensor system 20 is arranged. The temperature sensor system 20 comprises infeed temperature sensors 215, outlet temperature sensors 216 and roll end temperature sensors 217. To the temperature sensor system 20 a data log, display and control unit 30 is connected wirelessly in this example. The temperature measurement results of the infeed temperature sensors 215 indicate the running properties of the pulp flow and possible build-ups and/or jams. The temperature measurement results of the outlet temperature sensors 216 indicate the running properties of the pulp flow. Based on differences in the measurement results of the infeed temperature sensors 215 and the measurement results of the outlet temperature sensors 216 the amount of removed liquid and the pressing efficiency can be detected. The measurement results of the roll end temperature sensors 217 indicate the level of the liquid in the outlet and possible overflow to the bearings.

Based on the measurement results of the temperature sensor system of the measuring system a temperature map of the suspension treatment device is generated in the data log, display and control unit 30 of the measuring system.

The measurement system of the pulp production device 10 is based on temperature sensor system 20 comprising a number of temperature sensors attached on the outer surface of a wallZ-s 13 of the chamber 14.

In the temperature sensor system 20 the temperature sensors are advantageously mounted in at least one band and the band or the bands form thus a bus type temperature sensor system of the measuring system. Advantageously, the bus type temperature sensor system provides a long sensor band/-s, in which the temperature sensors are located spaced apart at desired locations. The temperature sensor band/-s can be attached onto the outer surface of the wall of the device / the chamber by adhesive or mechanically. Advantageously, the temperature sensors / the temperature sensor bands of the temperature sensor system 20 are mounted to a location/locations on the outer surface of the wall/-s 13 of the chamber 14, where the pulp is directly on the other side of the wall 13 i.e. no insulation on the wall is provided. Advantageously, the temperature sensors / the temperature sensor bands of the temperature sensor system 20 are permanently fixed on the outer surface of the wall/-s 13 of the chamber 14.

### Reference signs used in the drawing:

- 10: wash press
- 11, 12: press roll
- 13: wall of the chamber
- 14: chamber
- 15: infeed flow of pulp
- 16: outlet flow of pulp
- 17: partial outflow of washing liquid
- 18: shaft of press roll
- 19: bearings
- 20: temperature sensor system
- 215: infeed temperature sensor
- 216: outlet temperature sensor
- 217: roll end temperature sensor
- 30: data log, display and control unit
- N: pressing nip

## Claims

1. Pulp suspension treatment device (10), which is a wash press (10) comprising a chamber (14) formed inside a wall (13) and two pressing rolls (11, 12), between which a pressing nip (N) is formed, wherein the pressing rolls (11, 12) are located in the chamber (14), **characterized by** a measuring system, which comprises a temperature sensor system (20) comprising several temperature sensors attached on an outer surface of the wall (13) of the chamber (14), wherein the temperature sensor system (20) is configured to create a temperature map indicating variation in temperatures on the outer surface of the wall (13) of the chamber (14), and wherein the temperature map is configured to indicate stagnant suspension flow or build-ups in the chamber (14) of the pulp suspension treatment device (10).

2. Pulp suspension treatment device (10) according to claim 1, **characterized in that** in the temperature sensor system (20) the temperature sensors are mounted in at least one band attached on the outer surface of the wall (13) of the chamber (14).

3. Pulp suspension treatment device (10) according to claim 1 or 2, **characterized in that** the temperature sensor system (20) is a bus type temperature sensor system.

4. Pulp suspension treatment device (10) according to any of claims 1 - 3 **characterized in that** the measuring system comprises a data log, display and control unit (30) wirelessly or by wired connection connected to the temperature sensor system (20).

5. Pulp suspension treatment device (10) according to claim 1, **characterized in that** the wash press (10) comprises at least one infeed flow (15) of suspension and at least one outlet flow (16) of the suspension and that the temperature sensor system (20) comprises infeed temperature sensors (215) and outlet temperature sensors (216).

6. Pulp suspension treatment device (10) according to claim 1 or 5, **characterized in that** the wash press (10) is configured to generate at least one partial outflow of pressed liquid (17), which is configured to flow inside at least one of the pressing rolls (11;12) and to flow out via at least one end of the pressing roll (11; 12) and that the temperature sensor system (20) comprises at least one roll end temperature sensor (217).

## Patentansprüche

1. Faserstoffsuspensionsbehandlungsvorrichtung (10), die eine Waschpresse (10) ist, die eine Kammer (14), die innerhalb einer Wand (13) geformt ist, und zwei Presswalzen (11, 12), zwischen denen ein Presswalzenspalt (N) gebildet wird, umfasst, wobei die Presswalzen (11, 12) in der Kammer (14) angeordnet sind, **gekennzeichnet durch** ein Messsystem (20), das ein Temperatursensorsystem umfassende mehrere Temperatursensoren umfasst, die an einer Außenfläche der Wand (13) der Kammer (14) befestigt sind, wobei das Temperatursensorsystem (20) dafür konfiguriert ist, eine Temperaturabbildung zu erzeugen, die eine Veränderung bei den Temperaturen auf der Außenfläche der Wand (13) der Kammer (14) anzeigt, und wobei die Temperaturabbildung dafür konfiguriert ist, einen stagnierenden Suspensionsstrom oder Zunahmen in der Kammer (14) der Faserstoffsuspensionsbehandlungsvorrichtung (10) anzuzeigen.

2. Faserstoffsuspensionsbehandlungsvorrichtung (10) nach Anspruch 1, **dadurch gekennzeichnet, dass** in dem Temperatursensorsystem (20) die Temperatursensoren in mindestens einem Band angebracht sind, das an der Außenfläche der Wand (13) der Kammer (14) befestigt ist.

3. Faserstoffsuspensionsbehandlungsvorrichtung (10) nach Anspruch 1 oder 2, **dadurch gekennzeichnet, dass** das Temperatursensorsystem (20) ein Temperatursensorsystem vom Bus-Typ ist.

4. Faserstoffsuspensionsbehandlungsvorrichtung (10) nach einem der Ansprüche 1 bis 3, **dadurch gekennzeichnet, dass** das Messsystem eine Datenprotokollier-, Anzeige- und Steuerungseinheit (30) umfasst, die drahtlos oder durch eine drahtgebundene Verbindung mit dem Temperatursensorsystem (20) verbunden ist.

5. Faserstoffsuspensionsbehandlungsvorrichtung (10) nach Anspruch 1, **dadurch gekennzeichnet, dass** die Waschpresse (10) mindestens einen Einspeisestrom (15) von Suspension und mindestens einen Auslassstrom (16) der Suspension umfasst und dass das Temperatursensorsystem (20) Einspeisungstemperatursensoren (215) und Auslasstemperatursensoren (216) umfasst.

6. Faserstoffsuspensionsbehandlungsvorrichtung (10) nach Anspruch 1 oder 5, **dadurch gekennzeichnet, dass** die Waschpresse (10) dafür konfiguriert ist, mindestens einen teilweisen Ausfluss von abgepresster Flüssigkeit (17) zu erzeugen, der dafür konfiguriert ist, innerhalb mindestens einer der Presswalzen (11, 12) zu strömen und über mindestens ein Ende der Presswalze (11, 12) auszuströmen, und dass das Temperatursensorsystem (20) mindestens einen Walzenend-Temperatursensor (217) umfasst.

## Revendications

1. Dispositif de traitement d'une suspension de pâte (10), qui est une presse de lavage (10) comprenant une chambre (14) formée dans une paroi (13) et deux rouleaux de compression (11,12) entre lesquels un intervalle de compression (N) est formé, les rouleaux de compression (11,12) étant situés dans la chambre (14), **caractérisé par** un système de mesure, qui comprend un système de capteur de température (20) comprenant plusieurs capteurs de température fixés sur une surface extérieure de la paroi (13) de la chambre (14), la température du système de capteur (20) étant configurée pour créer une carte de température indiquant la variation des températures sur la surface extérieure de la paroi (13) de la chambre (14), et la carte de température étant configurée pour indiquer un flux de suspension stagnant ou des accumulations dans la chambre (14) du dispositif de traitement d'une suspension de pâte (10).

2. Dispositif de traitement d'une suspension de pâte (10) selon la revendication 1, **caractérisé en ce que**, dans le système de capteur de température (20), les capteurs de température sont montés dans au moins une bande fixée sur la surface extérieure de la paroi (13) de la chambre (14).

3. Dispositif de traitement d'une suspension de pâte (10) selon la revendication 1 ou 2, **caractérisé en ce que** le système de capteur de température (20) est un système de capteur de température de type bus.

4. Dispositif de traitement d'une suspension de pâte (10) selon l'une quelconque des revendications 1 à 3, **caractérisé en ce que** le système de mesure comprend une unité de journal, d'affichage et de contrôle de données (30) connectée sans fil ou par connexion filaire au système de capteur de température (20).

5. Dispositif de traitement d'une suspension de pâte (10) selon la revendication 1, **caractérisé en ce que** la presse de lavage (10) comprend au moins un flux d'alimentation (15) de suspension et au moins un flux d'évacuation (16) de la suspension et que le système de capteur de température (20) comprend des capteurs de température d'alimentation (215) et des capteurs de température d'évacuation (116).

6. Dispositif de traitement d'une suspension de pâte (10) selon la revendication 1 ou 5, **caractérisé en ce que** la presse de lavage (10) est configurée pour générer au moins une sortie partielle de liquide comprimé (17), qui est configurée pour s'écouler vers l'intérieur d'au moins un des rouleaux de compression (11 ; 12) et pour s'écouler vers l'extérieur via au moins une extrémité du rouleau de compression (11 ; 12) et que le système de capteur de température (20) comprend au moins un capteur de température d'extrémité de rouleau (217).
